# EUROPÄISCHE PATENTSCHRIFT

(11) **EP 3 891 409 B1**
(45) Veröffentlichungstag und Bekanntmachung des Hinweises auf die Patenterteilung: **03.05.2023**
(21) Anmeldenummer: 19773344.7
(22) Anmeldetag: 09.09.2019
(51) Int. Cl.: F16C 33/12, F16C 33/04, F16C 23/04, F16C 33/20

(54) **GELENKLAGER**
SPHERICAL BEARING
ARTICULATION À ROTULE

(30) Priorität: 05.12.2018 DE 102018131021
(43) Veröffentlichungstag der Anmeldung: 13.10.2021
(73) Patentinhaber: Schaeffler Technologies AG & Co. KG, 91074 Herzogenaurach (DE)
(72) Erfinder: KURSAWE, Serge, 91080 Uttenreuth (DE); WEITKAMP, Thomas, 32139 Spenge (DE); BOLTE, Frank, 49324 Melle (DE); KÖNIG, Thomas, 91341 Röttenbach (DE); PODGAYNYY, Nikolay, 91325 Adelsdorf (DE)
(86) Internationale Anmeldenummer: PCT/DE2019/100800
(87) Internationale Veröffentlichungsnummer: WO 2020/114538

(56) Entgegenhaltungen:
- EP-A2- 1 582 756
- AT-B- 412 284
- DE-A1-102006 027 502
- DE-A1-102015 105 520
- DE-C1- 3 509 572
- US-A- 4 848 934
- US-A1- 2007 223 850
- US-A1- 2009 154 990
- US-A1- 2010 314 005
- US-A1- 2018 187 781

## Beschreibung

Die Erfindung betrifft ein Gelenklager umfassend ein metallisches erstes Lagerelement aus Stahl, welches zumindest partiell mittels einer Beschichtung beschichtet ist, und ein metallisches zweites Lagerelement aus Stahl, welches zumindest partiell mit einem PTFE enthaltenden Gleitbelag beschichtet ist.

Gleitlager in Form von Gelenklagern mit dem genannten Aufbau sind hinreichend bekannt. Auf einen Innenring mit einer sphärischen Oberfläche wurden dabei zumeist eine Hartchromschicht als Beschichtung aufgebracht, um den Verschleißschutz im Bereich des Gleitkontaktes zwischen Innenring und Außenring zu erhöhen und einen Korrosionsschutz vorzusehen. Zur Herstellung solcher Hartchromschichten sind üblicherweise Chrom(VI)-haltige Elektrolytbäder im Einsatz, die inzwischen unter Umweltgesichtspunkten als bedenklich eingestuft sind und deren Verwendung verstärkt legislativen Beschränkungen unterliegt.

Es besteht demnach ein Bedürfnis, die Hartchromschicht durch eine umweltfreundlicher herstellbare Beschichtung zu ersetzen.

Die DE 10 2013 225 860 A1 offenbart bereits ein Gleitlager, insbesondere Gelenklager, bei dem die Hartchromschicht ersetzt ist, indem ein Innenring aus Stahl, wie 100Cr6, nitrocarburiert wird. Die nitrocarburierte Oberfläche bildet dabei die erste Gleitfläche aus.

In US 2009/154990 A1 wird ein Kugelgelenk aus einem metallischen Innenring und Außenring beschrieben. Das Kugelgelenk weist eine erste Kontaktschicht auf, die auf der kugelförmigen Oberfläche des einen Rings und eine zweite Kontaktschicht, die auf der sphärischen Oberfläche des anderen Rings aufgebracht ist. Dabei weist die erste Kontaktschicht eine Härte auf, die geringer ist als die Härte der zweiten Kontaktschicht und eine Dicke, die größer ist als die Dicke der zweiten Kontaktschicht. Die erste Kontaktschicht ist dazu geeignet, Festschmierstoffpartikel durch Reibung mit der zweiten Kontaktschicht freizusetzen.

Die US 2018/187781 A1 offenbart ein Gleitelement, welches ein Basiselement aus Stahl und eine Hartbeschichtung aufweist, welche sich auf dem Basiselement befindet und eine Oberfläche bildet, die als Gleitfläche dient. Die Hartbeschichtung weist einen zwischen Basiselement in Richtung der Oberfläche veränderlichen Elastizitätsmodul auf.

Die US 4 848 934 A umfasst eine Kombination aus Gleitring und Lagerelement für gleitende Rotationsbewegungen, wobei sich das Lagerelement innerhalb des Gleitrings befindet. Eines der Elemente besteht im Wesentlichen aus Kupfer, das andere im Wesentlichen aus Titan. Die Elemente haben geschmierte Kontaktflächen, wobei das Element aus Titan an seiner Kontaktfläche mit Chromoxid beschichtet ist.

Aus der DE 10 2014 107 036 A1 ist ein Gelenklager mit beschichteter Titankugel bekannt. Das Gelenklager umfasst einen in einer Büchse drehbar angeordneten Innenring, welcher mit einer DLC-Beschichtung versehen sein kann. Zwischen dem Innenring und der Büchse kann ein Gleitmittel in Form einer Folie angeordnet sein.

Aus der DE 69 330 10 U ist ein Gelenklager bekannt, welches einen Außenring aufweist, in dem eine Hülse schwimmend gelagert ist. Diese Hülse ist einseitig, und zwar auf ihrer dem Außenring abgekehrten Innenseite, mit Polytetrafluorethylen (PTFE) beschichtet.

Die EP 1 582 756 A2 offenbart ein Metall-Metall-Lager mit einem Lagergehäuse aus einem ersten Material und einer Kugel aus einem zweiten Material, wobei die Kugel im Gehäuse gehalten wird. Der Grenzbereich zwischen dem Gehäuse und der Kugel weist zwei Grenzflächen auf. Eines der dort verwendeten Materialien ist eine Titanlegierung, die eine Diffusionszone in der Nähe ihrer Oberfläche aufweist, an der eine Beschichtung aus Titannitrid haftet, um so eine der Grenzflächen zu bilden.

Die US 2007 / 0 223 850 A1 offenbart die Merkmale des Oberbegriffs des Anspruchs 1 und beschreibt ein Gelenklager, bei welchem ein Lagerelement aus einer Titanlegierung gebildet ist, die eine PVD-Beschichtung aus TiN aufweist. Das andere Lagerelement weist einen schmierenden Belag enthaltend PTFE auf.

In der DE 10 2006 027502 A1 ist ein Verfahren zur Herstellung einer verschleißfesten Beschichtung und eine verschleißfeste Beschichtung auf vorbestimmten Flächen offenbart. Diese besteht aus mindestens einer auf die vorbestimmte Fläche aufgebrachten metallfreien amorphen Kohlenwasserstoffschicht mit sp²- und sp³-hybridisiertem Kohlenstoff für eine Reibungsreduzierung und eine Erhöhung des Verschleißwiderstandes der vorbestimmten Fläche sowie eine elektrische Isolierung.

Aus der US 2010/314005 A1 ist zum einen ein Bauteil bekannt, das sich aus einem Substrat aus rostfreiem Stahl, einer Zwischenschicht, die auf der Oberfläche des Substrats aufgetragen ist, und einem amorphen Kohlenstofffilm, der auf der Oberfläche der Zwischenschicht aufgetragen ist, zusammensetzt. Zum anderen ist ein Bauteil bekannt, der aus einem Substrat aus rostfreiem Stahl, einem Substrat, dessen Oberflächenschichtteil einer Nitrierbehandlung unterzogen wird, und einem amorphen Kohlenstofffilm, der auf der Oberfläche des Oberflächenschichtteils aufgetragen wird, besteht.

Die DE 10 2015 105 520 A1 offenbart ein Getriebe und ein Verfahren zur Herstellung oder zum Betreiben des Getriebes. Es ist eine beschichtete Anlaufscheibe vorhanden, wobei die Beschichtung eine amorphe Kohlenstoffschicht, zum Beispiel eine DLC(Diamond Like Carbon)-Schicht, eine Chromschicht, Schichten, die mittels PVD-Beschichtung aufgetragen werden, kristalline Kohlenstoffschichten und/oder Diamantbeschichtungen umfassen kann. Die mittels PVD-Beschichtung aufgetragene Schicht kann dabei TiN, CrN, TiAIN, TiCN, TiSiN, ZrN, und/oder AlTiN umfassen.

Die DE 35 09 572 C1 umfasst ein Gleitelement, das mit mindestens einem weiteren Gleitelement in Kontakt steht. Dabei sind die Funktionsflächen der Gleitelemente in ihrer Form einander angepasst und das Gleitelement weist als Trägerkörper einen geschliffenen und geläppten keramischen Sinterformkörper auf. Dieser ist mindestens an seinen Funktionsflächen mit einer nach dem CVD- oder PVD-Verfahren aufgetragenen und mechanisch unbehandelten Beschichtung aus keramischen Werkstoffen versehen.

Die AT 412 284 B beschreibt eine Trägerschicht für ein Lagerelement aus einer Aluminiumknetlegierung. Weiterhin ist ein Lagerelement, insbesondere für ein Gleitlager oder einen Anlaufring, beschrieben, mit einer Stützschale, einer Laufschicht und der zwischen diesen angeordneten Trägerschicht. Die Laufschicht ist als eine Blei-, Zinn-, Wismut-, Indium- oder Kupfer-Basislegierung, als eine Kunststoffschicht, insbesondere enthaltend Festschmierstoff, oder als ein Gleitlack ausgebildet.

Der Erfindung liegt die Aufgabe zugrunde, ein gegenüber dem genannten Stand der Technik weiterentwickeltes Gelenklager anzugeben, wobei rationelle, umweltfreundliche Fertigungsmöglichkeiten gegeben sein sollen.

Diese Aufgabe wird erfindungsgemäß gelöst durch ein Gelenklager mit den Merkmalen des Anspruchs 1. Das Gelenklager umfasst ein metallisches erstes Lagerelement aus Stahl, welches zumindest partiell mittels einer Beschichtung beschichtet ist, und ein metallisches zweites Lagerelement aus Stahl, welches zumindest partiell mit einem PTFE (Polytetrafluorethylen) enthaltenden Gleitbelag beschichtet ist, wobei die Beschichtung und der Gleitbelag in Gleitkontakt stehen, und wobei die Beschichtung mindestens eine, auf dem ersten Lagerelement mittels eines PVD-, CVD- oder PECVD-Verfahrens abgeschiedene erste Schicht umfasst.

Die mindestens eine erste Schicht ist in einer möglichen Ausführungsform als eine oxidische, nitridische, oxynitridische oder karbidische Hartstoffschicht ausgebildet und enthält mindestens eines der Elemente Titan, Aluminium, Chrom, Wolfram und Molybdän. Vorzugsweise ist die Hartstoffschicht gebildet aus mindestens einem Material der Gruppe umfassend TiN, TiCN, AL₂O₃, TiAIN, CrN, AlCrN, MoN, WC. Auch Mischformen dieser Materialien, optional mit Dotierungen, sind als erste Schicht(en) geeignet.

In einer weiteren möglichen Ausführungsform ist die mindestens eine erste Schicht als eine amorphe Kohlenstoffschicht oder eine Diamantschicht ausgebildet. Dabei kann die amorphe Kohlenstoffschicht (Nomenklatur gemäß VDI2840, Juni 2012) aus wasserstofffreiem amorphen Kohlenstoff ta-C oder a-C gebildet sein. Alternativ kann die amorphe Kohlenstoffschicht aus wasserstoffhaltigem amorphen Kohlenstoff a-C:H gebildet sein. Hier kann auch eine metallische oder nichtmetallische Dotierung vorgesehen sein. Bei einem zur Dotierung eingesetzten Metall handelt es sich zum Beispiel um Wolfram, Titan, Silizium oder Tantal. Eine mit Wolfram dotierte wasserstoffhaltige amorphe Kohlenstoffschicht (a-C:H:W) oder eine mit Silizium dotierte wasserstoffhaltige amorphe Kohlenstoffschicht (a-CH:Si) sind bevorzugt. Eine, ein Nichtmetall enthaltende amorphe Kohlenstoffschicht wird bezeichnet als a-C:H:X, wobei X für ein Nichtmetall, wie beispielsweise Stickstoff, steht.

In einer weiteren möglichen Ausführungsform ist die mindestens eine erste Schicht eine metallische Schicht, die aus einem oder mehreren der Metalle umfassend Chrom, Messing, Bronze, Weißmetall, Kupfer, Zink oder Zinn gebildet ist.

Es wurden folgende Ausführungsformen als erfindungsgemäß ausgewählt:
Erfindungsgemäß umfasst die Beschichtung mindestens eine, auf der mindestens einen ersten Schicht angeordnete und dem ersten Lagerelement abgewandte weitere Schicht. Die mindestens eine weitere Schicht weist eine, zu einer unmittelbar angrenzenden ersten Schicht unterschiedliche Zusammensetzung auf.

Erfindungsgemäß bildet die mindestens eine weitere Schicht, die an die mindestens eine erste Schicht angrenzt, die dem ersten Lagerelement abgewandt angeordnet ist, eine zweite Schicht, die sich von der angrenzenden ersten Schicht in ihrer Zusammensetzung unterscheidet und mittels eines PVD-, CVD- oder PACVD-Verfahrens gebildet ist.

In einer erfindungsgemäßen ersten Ausführungsform des Gelenklagers ist die erste Schicht aus Chrom und die zweite Schicht aus Chromnitrid gebildet.

In einer erfindungsgemäßen zweiten Ausführungsform des Gelenklagers ist eine erste Schicht aus Chrom, eine weitere erste Schicht aus Wolframkarbid und die zweite Schicht aus einer mit Wolfram dotierten wasserstoffhaltigen amorphen Kohlenstoffschicht des Typs a-C:H:W gebildet.

In einer erfindungsgemäßen dritten Ausführungsform des Gelenklagers ist die an die zweite Schicht angrenzende erste Schicht aus Molybdännitrid und die zweite Schicht aus Kupfer gebildet.

Insbesondere sind weiterhin mehrere dritte Schichten aus Molybdännitrid und mehrere vierte Schichten aus Kupfer vorhanden, welche abwechselnd angeordnet sind und eine Schichtfolge ausbilden. Das Kupfer bildet einen Schmierfilm aus, während das Molybdännitrid den abrasiven Verschleiß senkt.

In einer erfindungsgemäßen vierten Ausführungsform des Gelenklagers ist die erste Schicht eine mit Silizium dotierte amorphe Kohlenstoffschicht des Typs a-C:H:Si und die zweite Schicht eine amorphe Kohlenstoffschicht des Typs a-C:H.

In einer erfindungsgemäßen fünften Ausführungsform des Gelenklagers ist die erste Schicht eine mit Silizium dotierte amorphe Kohlenstoffschicht des Typs a-C:H:Si und die zweite Schicht eine amorphe Kohlenstoffschicht des Typs a-C:H:Si mit unterschiedlicher Dotierung an Silizium.

Dabei ist in der ersten, dritten, vierten und fünften Ausführungsform lediglich eine erste Schicht angeordnet oder gemäß der zweiten Ausführungsform eine Kombination aus zwei ersten Schichten auf dem ersten Lagerelement angeordnet sein.

Teile des Gelenklagers sind also ein erstes Lagerelement, welches - insbesondere mehrlagig - beschichtet ist, sowie ein zweites Lagerelement, welches einen PTFE enthaltenden Gleitbelag aufweist.

Der Gleitbelag ist insbesondere mit dem metallischen zweiten Lagerelement verklebt und mit PTFE-Fasern verstärkt. Als Fasern zur Verstärkung des Gleitbelags kommen generell textile Materialien wie Gewebe, Gewirke, Gestricke und dergleichen zum Einsatz. Neben den PTFE- Fasern können zusätzlich Stützfasern, insbesondere aus einem anderen Kunststoff, aus Metall, aus Glas, aus Kohlenstoff oder aus Keramik vorhanden sein, wobei diese allein oder in beliebiger Kombination miteinander vorhanden sein können. Der Gleitbelag enthält in bevorzugter Ausgestaltung ein PTFE-Gewebe in einer Harzmatrix.

Alternativ weist der Gleitbelag eine Schicht aus gesinterter Bronze auf, die mit einer PTFE-Schicht versehen ist, so dass im Bereich des Gleitkontakts ein Metall-Polymer-Verbundmaterial vorliegt.

Bei dem ersten Lagerelement kann es sich um den Innenring oder den Außenring eines Gelenklagers handeln. So weist bevorzugt der Innenring die Beschichtung und der Außenring den Gleitbelag auf. Aber auch eine inverse Anordnung ist möglich.

Den eingesetzten Abscheideverfahren, wie dem PVD- (physical vapor deposition) Verfahren, dem PECVD- (plasma enhanced chemical vapor deposition) Verfahren sowie dem CVD- (chemical vapor deposition) Verfahren, ist gemeinsam, dass im Gegensatz zur zum Prioritätszeitpunkt mehrheitlich verwendeten Hartverchromung hier die Verwendung Chrom (VI)-haltiger Substanzen auf einem Lagerelement vermieden wird.

Eine weitere Schicht in Form einer amorphen Kohlenstoffschicht (Nomenklatur gemäß VDI2840, Juni 2012) ist aus wasserstoffhaltigem amorphen Kohlenstoff a-C:H gebildet. Hier kann auch eine metallische oder nichtmetallische Dotierung vorgesehen sein. Eine mit Wolfram dotierte wasserstoffhaltige amorphe Kohlenstoffschicht (a-C:H:W) oder eine mit Silizium dotierte wasserstoffhaltige amorphe Kohlenstoffschicht (a-C:H:Si) sind bevorzugt. Eine, ein Nichtmetall enthaltende amorphe Kohlenstoffschicht wird bezeichnet als a-C:H:X, wobei X für ein Nichtmetall, wie beispielsweise Stickstoff, steht.

Bevorzugt weist die Beschichtung die mindestens eine erste Schicht, eine zweite Schicht und auf dieser eine Schichtfolge auf, wobei die Schichtfolge abwechselnd dritte Schichten und vierte Schichten aufweist, wobei eine Zusammensetzung der dritten Schichten einer Zusammensetzung der an die zweite Schicht angrenzenden ersten Schicht entspricht und eine Zusammensetzung der vierten Schichten einer Zusammensetzung der zweiten Schicht entspricht. Dadurch kann eine besonders haltbare Beschichtung gebildet werden, die gute Schmiereigenschaften mit guter Verschleißresistenz verbindet.

In allen Fällen ist die Härte der mindestens einen ersten Schicht - unabhängig vom angewandten Messverfahren - bei weitem größer als die Härte des auf dem metallischen zweiten Lagerelement angeordneten Gleitbelags.

Nachfolgend werden einige bevorzugte Ausführungsbeispiele für die Beschichtung des metallischen ersten Lagerelements aus Stahl aufgeführt. Dabei ist die Schichtfolge auf dem ersten Lagerelement beziehungsweise Substrat aus Stahl in der angegebenen Reihenfolge realisiert.

| Beispiel 1: | Beispiel 2: |
|---|---|
| Substrat aus Stahl | Substrat aus Stahl |
| Erste Schicht: Chrom | Erste Schicht: Chrom |
| Zweite Schicht: Chromnitrid | Weitere erste Schicht: Wolframcarbid (WC) |
| | Zweite Schicht: a-C:H:W |

| Beispiel 3: | Beispiel 4 (nicht erfindungsgemäß): |
|---|---|
| Substrat aus Stahl | Substrat aus Stahl |
| Erste Schicht: a-C:H:Si | Erste Schicht: TiN oder TiAIN oder CrAlN |
| Zweite Schicht: a-C:H | Zweite Schicht: Gleitlack enthaltend PTFE |

### Beispiel 5:

Substrat aus Stahl
Erste Schicht: Molybdännitrid (MoN)
Zweite Schicht: Kupfer
Dritte Schichten: Molybdännitrid (MoN)
Vierte Schichten: Kupfer

### Beispiel 6:

Substrat aus Stahl
Erste Schicht: a-C:H:Si
Zweite Schicht: a-C:H:Si, wobei der Gehalt an Silizium in der zweiten Schicht lediglich 20 - 25% der Silizium-Dotierung der ersten Schicht entspricht

Nachfolgend werden Ausführungsbeispiele der Erfindung anhand der Zeichnungen näher erläutert. Hierin zeigen:
- Fig. 1: ein erfindungsgemäßes Gelenklager in einer schematischen Schnittdarstellung,
- Fig. 2: eine vergrößerte Darstellung im Bereich des Gleitkontakts der Figur 1, und
- Fig. 3: eine vergrößerte Darstellung analog Fig. 2 mit einer abweichen Beschichtung.

Einander entsprechende oder prinzipiell gleichwirkende Teile sind in allen Figuren mit den gleichen Bezugszeichen gekennzeichnet.

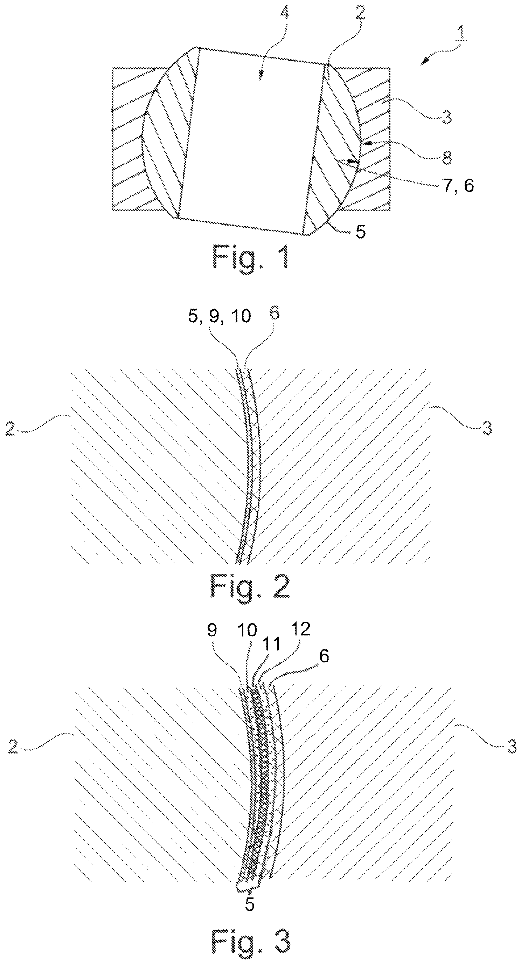

Ein in Figur 1 insgesamt mit dem Bezugszeichen 1 gekennzeichnetes, im Schnittbild gezeigtes Gelenklager ist aus einem metallischen ersten Lagerelement 2 aus Stahl, hier ein Innenring, und einem metallischen zweiten Lagerelement 3 aus Stahl, hier ein Außenring, gebildet. Das erste Lagerelement 2 weist eine zentrale Öffnung 4 zur Verbindung mit einem nicht dargestellten Anschlussteil auf. Auf einer konvexen Außenoberfläche 7 des ersten Lagerelements 2 ist die Beschichtung 5 aufgebracht. Auf einer konkaven Innenoberfläche 7 des zweiten Lagerelements 3 ist ein PTFEfaserverstärkter Gleitbelag 6 aufgeklebt. Die Beschichtung 5 des ersten Lagerelementes 2 steht mit dem Gleitbelag 6 in Gleitkontakt.

Figur 2 zeigt eine vergrößerte Darstellung einer nicht erfindungsgemäßen Ausführungsform des Gleitlagers im Bereich des Gleitkontakts der Figur 1. Auf dem metallischen Grundwerkstoff des ersten Lagerelementes 2 aus Stahl ist mittels Gasphasenabscheidung (PVD, CVD, PECVD) eine Beschichtung 5 aus einer ersten Schicht 9 aus TiN oder TiAIN oder CrAlN abgeschieden. Die erste Schicht 9 weist eine im Wesentlichen einheitliche Dicke auf. Hierdurch passt sich die Oberfläche der ersten Schicht 9 der gegebenen konvexen Außenoberfläche 7 an. Weiterhin ist hier ein Gleitlack in Form einer nicht gesondert dargestellten PTFE-Imprägnierschicht als zweite Schicht 10 auf der ersten Schicht 9 aufgetragen. Durch die PTFE-Imprägnierschicht werden eventuell vorhandene Unebenheiten der ersten Schicht 9 egalisiert, so dass sich eine glatte, im vorliegenden Fall sphärische, Außenoberfläche des ersten Lagerelementes 2 ergibt.

Figur 3 zeigt eine analoge Darstellung wie Figur 2, jedoch mit einer Beschichtung 5 auf dem ersten Lagerelement 2 gemäß der Erfindung. Die erste Schicht 9 ist unmittelbar auf der konvexen Außenoberfläche 7 des ersten Lagerelementes 2 aus Stahl aufgebracht und aus Molybdännitrid gebildet. Alternativ kann zwischen dem ersten Lagerelement 2 und der ersten Schicht 9 mindestens eine weitere erste Schicht angeordnet sein, insbesondere aus Chrom und/oder Molybdän. Es ist eine zweite Schicht 10 vorhanden, die aus Kupfer gebildet ist. An die zweite Schicht 10 schließen sich eine dritte Schicht 11 aus Molybdännitrid und eine vierte Schicht 12 aus Kupfer an. Es ist dabei eine hier nicht im Detail gezeigte Schichtfolge an abwechselnd angeordneten dritten Schichten 11 und vierten Schichten 12 vorhanden.

Die konkave Innenoberfläche 7 des zweiten Lagerelements 3 ist auch hier mit dem Gleitbelag 6 beklebt. Der Gleitbelag 6 ist durch ein PTFE-Gewebe, eingebettet in einer Harzmatrix, gebildet oder weist ein Metall-Polymer-Verbundmaterial enthaltend gesinterte Bronze und PTFE auf. Die mehrlagige Beschichtung 5 des ersten Lagerelementes 2 steht mit dem Gleitbelag 6 in Gleitkontakt.

### Bezugszeichenliste

- 1: Gelenklager
- 2: Lagerelement
- 3: Lagerelement
- 4: Öffnung
- 5: Beschichtung
- 6: Gleitbelag
- 7: konkave Innenoberfläche
- 8: konvexe Außenoberfläche
- 9: erste Schicht
- 10: zweite Schicht
- 11: dritte Schicht
- 12: vierte Schicht

## Patentansprüche

1. Gelenklager (1), umfassend
ein metallisches erstes Lagerelement (2) aus Stahl, welches zumindest partiell mittels einer Beschichtung (5) beschichtet ist, und
ein metallisches zweites Lagerelement (3) aus Stahl, welches mit einem PTFE enthaltenden Gleitbelag (6) beschichtet ist,
wobei die Beschichtung (5) und der Gleitbelag (6) in Gleitkontakt stehen, und
wobei die Beschichtung (5) mindestens eine, auf dem ersten Lagerelement (2) mittels eines PVD-, CVD- oder PECVD-Verfahrens abgeschiedene erste Schicht (9) umfasst, **dadurch gekennzeichnet, dass** die Beschichtung (5) weiterhin mindestens eine, auf der mindestens einen ersten Schicht (9) angeordnete und dem ersten Lagerelement (2) abgewandte weitere Schicht umfasst, wobei die mindestens eine weitere Schicht, die an die mindestens eine erste Schicht (9) angrenzt, die dem ersten Lagerelement (2) abgewandt angeordnet ist, eine zweite Schicht (10) bildet, die sich von der angrenzenden ersten Schicht (9) in ihrer Zusammensetzung unterscheidet und mittels eines PVD-, CVD- oder PECVD-Verfahrens gebildet ist,
a) die erste Schicht (9) aus Chrom und die zweite Schicht (10) aus Chromnitrid gebildet ist oder
b) eine erste Schicht (9) aus Chrom, eine weitere erste Schicht (9) aus Wolframkarbid und die zweite Schicht (10) eine mit Wolfram dotierte wasserstoffhaltige amorphe Kohlenstoffschicht des Typs a-C:H:W ist, oder
c) die an die zweite Schicht (10) angrenzende erste Schicht (9) aus Molybdännitrid und die zweite Schicht (10) aus Kupfer gebildet ist, oder
d) die erste Schicht (9) eine mit Silizium dotierte amorphe Kohlenstoffschicht des Typs a-C:H:Si und die zweite Schicht (10) eine amorphe Kohlenstoffschicht des Typs a-C:H oder eine amorphe Kohlenstoffschicht des Typs a-C:H:Si mit unterschiedlicher Dotierung an Silizium ist.

2. Gelenklager nach Anspruch 1, wobei die Beschichtung (5) in Fall a) oder Fall c) oder Fall d) genau eine erste Schicht (9) und genau eine weitere Schicht umfasst.

3. Gelenklager nach Anspruch 1, wobei die Beschichtung (5) zwei Schichten (9) und genau eine weitere Schicht umfasst.

4. Gelenklager (1) nach Anspruch 1, wobei die Beschichtung (5) die mindestens eine erste Schicht (9), die zweite Schicht (10) und auf dieser eine Schichtfolge umfasst, wobei die Schichtfolge abwechselnd dritte Schichten (11) und vierte Schichten (12) aufweist, wobei eine Zusammensetzung der dritten Schichten (11) einer Zusammensetzung der an die zweite Schicht (10) angrenzenden ersten Schicht (9) entspricht und eine Zusammensetzung der vierten Schichten (12) einer Zusammensetzung der zweiten Schicht (10) entspricht.

## Claims

1. A spherical bearing (1) comprising
a metal first bearing element (2) made of steel, which is coated at least in part by means of a coating (5), and
a metal second bearing element (3) made of steel, which is coated with a PTFE-containing sliding lining (6),
wherein the coating (5) and the sliding lining (6) are in sliding contact, and wherein the coating (5) comprises at least one first layer (9) deposited on the first bearing element (2) by means of a PVD, CVD or PECVD method; **characterised in that** the coating (5) further comprises at least one further layer arranged on the at least one first layer (9) and facing away from the first bearing element (2), wherein the at least one further layer, which adjoins the at least one first layer (9), which is arranged facing away from the first bearing element (2), forms a second layer (10), which differs in respect of its composition from the adjoining first layer (9) and is formed by means of a PVD, CVD or PECVD method,
a) the first layer (9) is formed from chromium and the second layer (10) is formed from chromium nitride, or
b) a first layer (9) is formed from chromium, a further first layer (9) is formed from tungsten carbide, and the second layer (10) is a hydrogen-containing tungsten-doped amorphous carbon layer of the type a-C:H:W, or
c) the first layer (9) adjoining the second layer (10) is formed from molybdenum nitride and the second layer (10) is formed from copper, or
d) the first layer (9) is a silicon-doped amorphous carbon layer of the type a-C:H: Si and the second layer (10) is an amorphous carbon layer of the type a-C:H or an amorphous carbon layer of the type a-C:H:Si with different silicon doping.

2. The spherical bearing according to claim 1, wherein the coating (5) comprises exactly one first layer (9) and exactly one further layer in case a) or case c) or case d).

3. The spherical bearing according to claim 1, wherein the coating (5) comprises two layers (9) and exactly one further layer.

4. The spherical bearing (1) according to claim 1, wherein the coating (5) comprises the at least one first layer (9), the second layer (10) and a layer sequence thereon, wherein the layer sequence has alternating third layers (11) and fourth layers (12), wherein a composition of the third layers (11) corresponds to a composition of the first layer (9) adjoining the second layer (10), and a composition of the fourth layers (12) corresponds to a composition of the second layer (10).

## Revendications

1. Palier à pivot (1), comprenant
un premier élément de palier métallique (2) en acier, qui est au moins partiellement recouvert d'un revêtement (5), et
un deuxième élément de palier métallique (3) en acier, qui est recouvert d'une couche lisse (6) contenant du PTFE,
le revêtement (5) et la couche lisse (6) étant en contact glissant, et le revêtement (5) comprenant au moins une première couche (9) déposée sur le premier élément de palier (2) selon un procédé de dépôt physique en phase vapeur, de dépôt chimique en phase vapeur ou de dépôt chimique en phase vapeur assisté par plasma, **caractérisé en ce que** le revêtement (5) comprend en outre au moins une autre couche disposée sur l'au moins une première couche (9) et opposée au premier élément de palier' (2), ladite au moins une autre couche, qui est adjacente à l'au moins une première couche (9) qui est disposée à l'opposé du premier élément de palier (2), formant une deuxième couche (10) qui se distingue de la première couche adjacente (9) par sa composition et qui est formée selon un procédé de dépôt physique en phase vapeur, de dépôt chimique en phase vapeur ou de dépôt chimique en phase vapeur assisté par plasma,
a) la première couche (9) est formée de chrome et la deuxième couche (10) est formée de nitrure de chrome ; ou
b) une première couche (9) est en chrome, une autre première couche (9) est en carbure de tungstène et la deuxième couche (10) est une couche de carbone amorphe contenant de l'hydrogène du type a-C:H:W, dopée au tungstène, ou
c) la première couche (9) adjacente à la deuxième couche (10) est formée de nitrure de molybdène et la deuxième couche (10) est formée de cuivre, ou
d) la première couche (9) est une couche de carbone amorphe du type a-C:H:Si dopée au silicium et la deuxième couche (10) est une couche de carbone amorphe du type a-C:H ou une couche de carbone amorphe du type a-C:H:Si avec un dopage différent en silicium.

2. Palier à pivot selon la revendication 1, dans lequel le revêtement (5) dans le cas a) ou le cas c) ou le cas d) comprend exactement une première couche (9) et exactement une autre couche.

3. Palier à pivot selon la revendication 1, dans lequel le revêtement (5) comprend deux couches (9) et exactement une autre couche.

4. Palier à pivot (1) selon la revendication 1, dans lequel le revêtement (5) comprend l'au moins une première couche (9), la deuxième couche (10) et, sur celle-ci, une succession de couches, la succession de couches présentant alternativement des troisièmes couches (11) et des quatrièmes couches (12), une composition des troisièmes couches (11) correspondant à une composition de la première couche (9) adjacente à la deuxième couche (10) et une composition des quatrièmes couches (12) correspondant à une composition de la deuxième couche (10).
